# NEW EUROPEAN PATENT SPECIFICATION

(11) **EP 1 263 283 B2**
(45) Date of publication and mention of the opposition decision: **05.03.2014**
(45) Mention of the grant of the patent: 03.11.2004
(21) Application number: 01914301.5
(22) Date of filing: 16.03.2001
(51) Int. Cl.: A01K 1/12, A01K 1/00, A01J 7/00

(54) **A DEVICE FOR AT LEAST ONE MILKING STALL AND A PARLOUR COMPRISING A PLURALITY OF MILKING STALLS**
VORRICHTUNG FUR MINDESTENS EINEN MELKSTAND UND MELKANLAGE MIT MEHREREN MELKSTANDEN
DISPOSITIF DESTINE A AU MOINS UNE STALLE DE TRAITE ET SALLE COMPRENANT UNE PLURALITE DE STALLES DE TRAITE

(30) Priority: 17.03.2000 SE 0000893
(43) Date of publication of application: 11.12.2002
(73) Proprietor: DeLaval Holding AB, 147 21 Tumba (SE)
(72) Inventor: JOHANNESSON, Leif, Börje, S-146 30 Tullinge (SE); OBERMÜLLER, Helmut, Peter, Paul, S-162 68 Vällingby (SE)
(74) Representative: Hällgren, Christer
(86) International application number: PCT/SE2001/000551
(87) International publication number: WO 2001/067852

(56) References cited:
- EP-A2- 0 576 085
- WO-A1-98/31212
- DE-A1- 4 339 131

## Description

### TECHNICAL FIELD OF THE INVENTION AND PRIOR ART

The present invention relates to a rotary parlour comprising a plurality of milking stalls.

In a conventional milking stall, there is a milking equipment with a lot of different components. These components comprise usually a milking member in the form of a number of teatcups which may be connected to a common claw, a long milk conduit connecting the claw to a milk-collecting member and to a vacuum source for transferring a milking vacuum to the teats, a holding member, or a so called service arm, for holding and supporting the long milk conduit, a pulsator arranged to provide a pulsating vacuum for a pulsating chamber in each teatcup, a remover for removing the milking member from the teats after the milking is finished, a control unit for controlling the vacuum level of the milking equipment and an operating panel for supervising and controlling of the milking procedure and the milking equipment. It is thereby known to provide these different components at different locations in the milking stall. Moreover, it is important to maintain good hygiene in the milking stall, especially it is important that the milking member is cleaned between each milking operation. Hereby, the milking stall may comprise a cleaning device for cleaning the milking member.

It is also known to provide at least some of the above-mentioned components in a cabinet in order to protect them and have them easily accessible at one single location. Such a cabinet is usually mounted in the milking stall so that it is easy to reach for the milker. The cabinet may be attached to a structural element of the milking stall, such as a bar or the like.

Today dairy farms have increased in size and use of high technology, wherein the demands for more efficient milking parlours have increased. Today milking parlours exist in different configurations and may have different capacity, i.e. may comprise different number of milking stalls. Each milking stall has a milking position for an animal. Moreover, the milking stalls of the milking parlours are usually narrow on the one hand in order to limit the movements of an animal during a milking operation and on the other hand in order to achieve as many milking stalls as possible in relation to the area available. This results in that the space available for different components of the milking equipment and other equipment such as cleaning equipment is limited. Moreover, the access to different components, such as for example the components of the milking equipment, is important to the milker. The access to different components is also important in case of service, maintenance and/or repair.

Moreover, to the producers of parlours, in order to be competitive on the market, it is important that the production costs of a parlour and/or an individual stall are kept at a low level, wherein it is an advantage to provide a parlour which has as few building elements as possible and that the building elements and parts of the building elements are easy to replace in case of service and/or repair or if some building elements or parts of the building elements are destroyed. Moreover, each building element of the milking stall has to be robust and withstand forces from an animal being present in a milking stall.

### SUMMARY OF THE INVENTION

The object of the invention is to provide an improved cabinet-like structure, which also forms a part of the milking stall or a milking parlour. Hereby, the cabinet-like structure has to be robust and withstand forces from an animal being present in a milking stall. It is also desirable that most of the elements of the cabinet-like structure are of a modular construction so that they may be easily replaced if required and the production costs may be kept low.

This object is achieved by the invention as defined in appended claim 1 in that the cabinet-like structure forms a building element of said milking stall. Consequently, the cabinet-like structure defines an inner space where different components, such as components of the milking equipment, may be housed at the same time as it forms a building element of said milking stall, i.e. forms a part of said milking stall.

According to the invention, the building element carries said wall arrangement and is mounted to said floor. Consequently, the cabinet-like structure forms a supporting structural element for said wall arrangement and since the cabinet-like structure extends from the floor a lot of equipment may be housed in the inner space. In a rotary parlour comprising a plurality of milking stalls, said floors of the milking stalls form a platform which may rotate during a milking operation of the animals in relation to the floor onto which the milker is standing who for example may supervise and control the milking procedure.

According to the invention, the cabinet-like structure comprises wall members of a material with thin wall thickness and the wall members extend in said substantially vertical direction and are attached to each other and form a hollow tube-like structure which surrounds said inner space. The wall members surrounding said inner space protect the different components, which are housed inside the cabinet-like structure. Moreover, since the wall members surround the inner space a cabinet-like structure is achieved which is easy to keep clean from the outside. The tube-like structure may have different shapes, in a cross sectional view seen along said longitudinal axis. However, the tube-like member is shaped so that it may resist forces from an animal being present in the milking stall.

According to a further embodiment of the invention, the cabinet-like structure comprises a top portion and a bottom portion and said bottom portion is attached to said floor. Consequently, the bottom portion may be directly attached to the floor of the milking stall.

According to a further embodiment of the invention, the cabinet-like structure comprises a substantially horizontal top plate which connects the wall members at the top portion, and a substantially horizontal bottom plate which connects the wall members at the bottom portion, wherein the cabinet-like structure forms an elongated hollow box-like structure which extends in said substantially vertical direction and which encloses said inner space. Owing to the top plate and the bottom plate a structure with good torsional rigidity is achieved. Moreover, since said top plate and said bottom plate together with said wall members enclose said inner space, the inner space is protected from dirt and dust from the outside environment. The bottom plate may be a part of said floor of the milking stall but the bottom plate may also be formed of a separate thin metal sheet, wherein the cabinet-like structure is attached to said floor via said thin metal sheet by screws or the like.

According to a further embodiment of the invention, the respective wall member is formed of a thin metal sheet, preferably corrosion-resisting steel, with a thickness about 2 - 4 mm. Also the top plate may be formed of a thin metal sheet, preferably corrosion-resisting steel, as well as the bottom plate, with a thickness about 2 - 4 mm.

According to the invention, the cabinet-like structure is provided at said second end. Consequently, the rear portion of the animal is close to the cabinet-like structure, since the rear portion of the animal being present in the milking stall is adjacent said second end of the milking stall. Hereby, it may happen that the animal pushes herself against the cabinet-like structure, wherein it is important that the cabinet-like structure may withstand substantially radial forces from the animal but also other forces of course.

According to a further embodiment of the invention, the device comprises means arranged to strengthen the cabinet-like structure in order to withstand substantially radial forces. Said means may comprise a support structural element, which is attached to at least one of said wall members, which surround the inner space of the cabinet-like structure. Moreover, said support structural element may be provided in a plane perpendicular to said substantially vertical direction. Preferably, said support structural element may be provided at the level of the upper rear portion of the animal.

According to a further embodiment of the invention, the cabinet-like structure is arranged to house a driving arrangement provided to remove the milking member from the animal after the milking is finished and said driving arrangement is attached to a support member which comprises means arranged to permit detachment of said support member in said inner space. If the driving arrangement is attached directly to the walls defining said inner space by means of some attachment members, such as screws or the like it may be very difficult to perform service since the inner space is narrow and offers a limited working space. Said means, which makes it possible to detach said support member, onto which the driving arrangement such as a pneumatic power cylinder is attached, facilitates service work and repair. The support member may be detached and may be provided outside the cabinet-like structure during service. An advantage with this arrangement is that service work and repair may be performed in a shorter time compare to if the driving arrangement would have been attached directly to the walls defining said inner space by means of some attachment members. Preferably said means arranged to permit detachment of said support member in said inner space may co-operate with for example an element provided on the outside of the cabinet-like structure by engaging said element. It is to be noted that the cabinet-like structure may house different components, such as said driving arrangement provided to remove the milking member but also other components such as components of the milking equipment for example a pulsator, a control unit comprising a computer arranged to supervise and control the milking procedure and a milking meter.

According to a further embodiment of the invention, the cabinet-like structure comprises an operating panel by which the milking equipment is controllable and the cabinet-like structure comprises a first door portion, which is detachably connected to the cabinet-like structure, wherein the operating panel is arranged on said first door portion. By the operating panel it is possible to supervise and control the milking procedure and the milking equipment. Consequently, connections extend from the operating panel to different components of the milking equipment. The operating panel may be of different types and function as a user interface, for example an interface for the milker. The operating panel may be of a simple type and only comprise a switch for the vacuum but it may also comprise a display etc. In case of service or repair of the operating panel it is possible to detach the first door portion and replace it by another one. The first door portion is preferably of a modular construction.

According to a further embodiment of the invention, the first door portion, when connected to the cabinet-like structure, is movable between a first position in which the cabinet-like structure forms a closed structure at least in said substantially vertical direction and a second position in which the inner space of the cabinet-like structure is possible to reach for a person in a working position from the outside of the cabinet-like structure. Hereby, for example the driving arrangement, which may be housed inside the cabinet-like structure, is accessible when said first door portion is in said second position.

According to a further embodiment of the invention, the cabinet-like structure comprises a second door portion which is movable between a first position in which the cabinet-like structure forms a closed structure at least in said substantially vertical direction and a second position, wherein the door portion carries a cleaning device for cleaning the milking member which is possible to use in said second position. Such a cleaning device has means for receiving the teatcups of the milking member after the milking is finished and is connected to a conduit for the supply of cleaning liquid to the teatcups and the claw. By housing the cleaning device inside the cabinet-like structure when it is not in use, it is protected from dirt and dust from the outside environment. This is an advantage since good hygiene is very important when running a dairy farm. By housing the cleaning device inside the cabinet-like structure it is also protected from violence from the animals.

According to a further embodiment of the invention, one of said wall members comprises a continuos thin sheet which is shaped in such a way that it surrounds a great part of said inner space. Consequently, said wall member may be produced by essentially one single piece of a sheet. According to one embodiment the sheet is shaped in such a way that it forms, in a cross-sectional view seen along said longitudinal axis, a rear wall portion and two side wall portions. The sheet, which preferably is a metal sheet, may be bent in order to form said rear wall portion and said side wall portions. The rear wall portion may be short in relation to the side wall portions. Moreover, each side wall portion may extend from the rear wall portion so that they form an angel, which is larger than 90° with the rear wall portion. Moreover, each side wall portion may be bent in said vertical direction at a distance from the outer end of each side wall portion in such a way that a plane, which extends along the surface of each of said outer side wall portion is perpendicular to a plane which is parallel to the surface of the rear wall portion. The length of each outer side wall portion, in a cross-sectional view seen along said longitudinal axis, may be shorter than the length of each side wall which extends directly from the rear wall portion, seen in said cross section. Since it may happen that an animal being present in the milking stall may push herself towards said outer side wall portion, it is an advantage that this outer side wall portion is short in order to withstand substantially radial forces from the animal. Moreover, it may happen that an animal being present in the milking stall may kick about. Hereby, it is an advantage that each side wall portion extends from the rear wall portion so that they form an angel, which is larger than 90° with the rear wall portion, since the leg of the animal may run along the surface of the side wall portion. According to one embodiment said support structural element arranged to strengthen the cabinet-like structure is attached to the outer end of said outer side wall portions.

According to a further embodiment of the invention, said wall arrangement forms a side wall of said milking stall and extends between said first end and said second end.

In the parlour initially defined, each of said milking stalls is defined by at least one wall arrangement and a floor, wherein each milking stall comprises a cabinet-like structure which forms a building element of said parlour.

In said parlour, said wall arrangement adjoins two milking stalls and the building element carries said wall arrangement and is mounted to the floor of said milking stalls.

According to the invention, said parlour is a rotary parlour.

The parlour according to the invention is defined in appended claim 1. Further optional preferred features are defined in subclaims 2-24.

### BRIEF DESCRIPTION OF THE DRAWINGS

The present invention is now to be explained more closely by means of different embodiments, given as examples, and with reference to the appendant drawings.
- Fig 1: shows schematically a perspective view of a device according to the present invention,
- Fig 2: shows schematically a perspective view of a part of a milking parlour comprising a plurality of milking stalls, wherein the device in Fig 1 is a part of the milking parlour,
- Fig 3: shows schematically the milking parlour in Fig 2 from an other perspective view,
- Fig 4a and Fig 4b: show schematically perspective views of an inner space of the device in Fig 1,
- Fig 5: shows schematically a driving member attached to a support member, which engages a suspension arrangement, which is intended to be attached to the inner space of the device, and
- Fig 6: shows schematically a perspective view of the device with the support member, onto which the driving arrangement is attached and which is provided on the outside of the device.

### DETAILED DESCRIPTION OF PREFERRED EMBODIMENTS

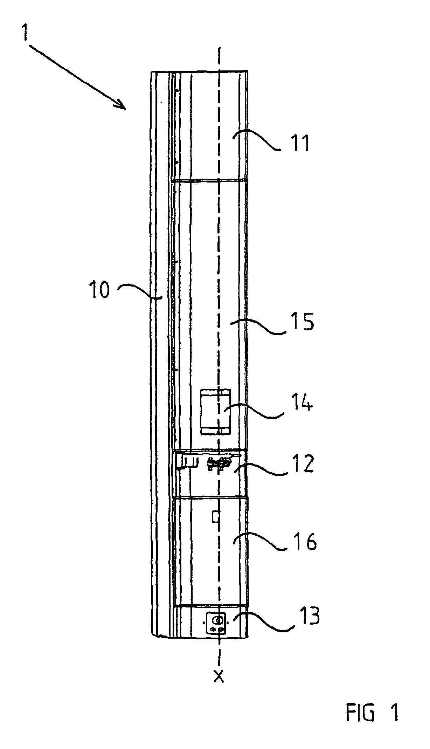

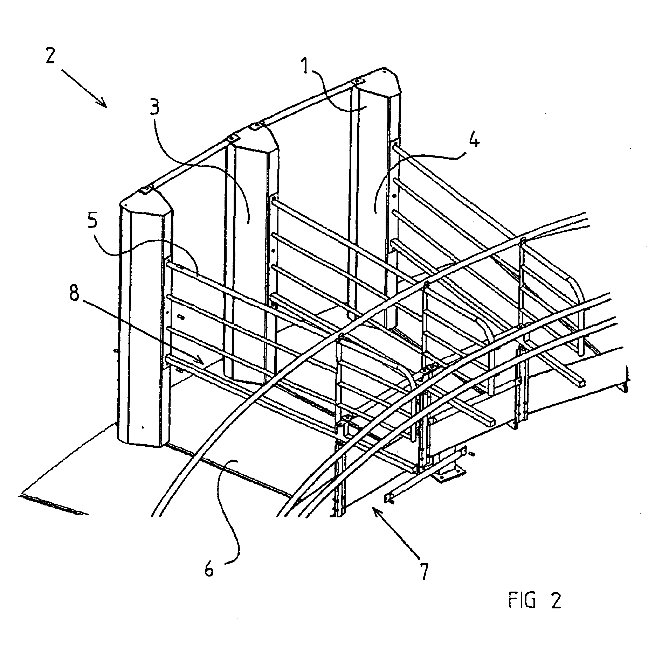

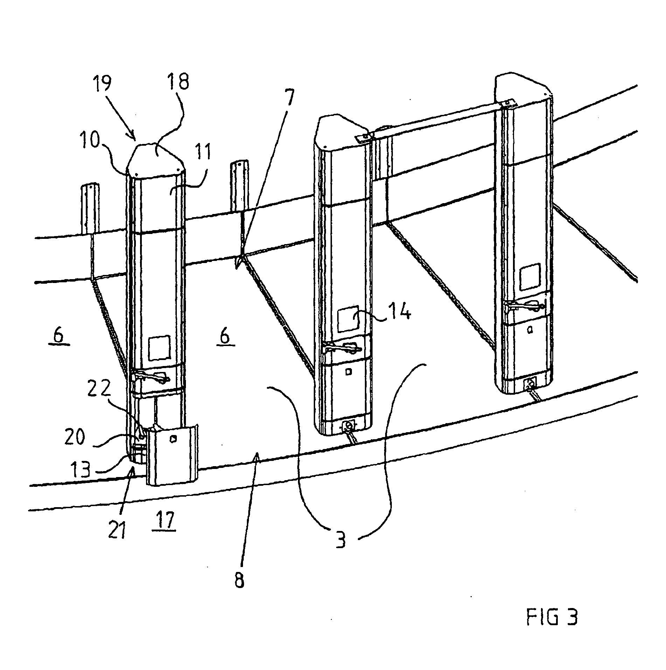

The device in Fig 1 comprises a cabinet-like structure 1 which has a longitudinal axis x extending in a substantial vertical direction and which forms a building element of a milking parlour 2, which is shown in Fig 2 and Fig 3.

Fig 2 shows a part of a rotary milking parlour 2 comprising a plurality of milking stalls 3 each of which is provided with a milking position 4 for an animal. Each milking stall 2 is defined by at least one wall arrangement 5 and a floor 6, and extends between a first end 7 and a second end 8. The wall arrangement 5 forms a side wall of two milking stalls 3 and extends between the first end 7 and the second end 8. Consequently, the wall arrangement 5 adjoins and separates two milking stalls 3 and the cabinet-like structure 1 carries the wall arrangement 5 at the second end 8 and is attached to the floor 6 of each milking stall 3 in question.

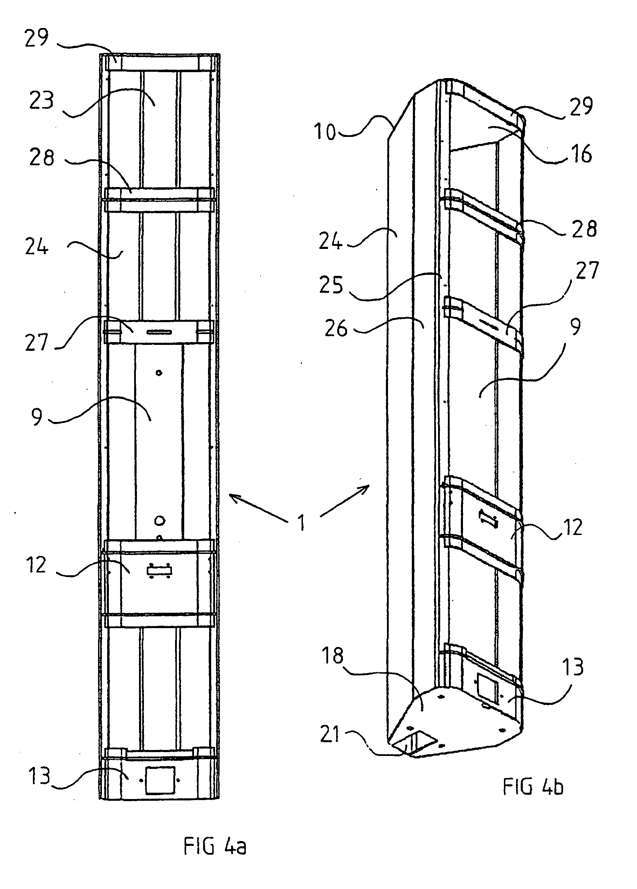

The cabinet-like structure 1 defines an inner space 9, shown in Fig 4a and Fig 4b, in which components of the milking equipment may be housed. Such as is shown in Fig 3 the cabinet-like structure 1 comprises wall members 10, 11, 12, 13 which extend in the substantially vertical direction and are connected to each other and form a hollow tube-like structure which surrounds the inner space 9. The wall members 10, 11, 12, 13 are preferably formed of a material with thin wall thickness.

Such as is shown in Fig 1 the cabinet-like structure 1 comprises an operating panel 14 which is provided on a first door portion 15 of the cabinet-like structure 1. By the operating panel 14 it is possible to supervise and control the milking procedure and the milking equipment. Consequently, connections extend from the operating panel 14 to different components of the milking equipment. The first door portion 15 is detachably connected to the cabinet-like structure 1. The first door portion 15 may be pivotably attached to the wall member 10 and may be movable between a first position, shown in Fig 1, in which the cabinet-like structure 1 forms a closed structure and a second position (not shown) in which the inner space 9 of the cabinet-like structure 1 is possible to reach for a person in a working position from the outside of the cabinet-like structure 1. The cabinet-like structure 1 also comprises a second door portion 16 which is movable between a first position, shown in Fig 1, in which the cabinet-like structure 1 forms a closed structure and a second position, wherein the second door portion 16 carries a cleaning device for cleaning the milking member which is possible to use in said second position. The second door portion 16 may be pivotably attached to the wall portion 13.

It is to be noted that the person in a working position is standing on the floor 17, cf. Fig 3, which is separate from the floors 6 of the milking stalls 3. The floors 6 of the milking stalls 3 form a platform, which may rotate during the milking operation of the animals in relation to the floor 17.

As can be seen in Fig 3 the cabinet-like structure 1 comprises a substantially horizontal top plate 18 provided at a top portion 19 of the cabinet-like structure 1 and a bottom plate 20 provided at a bottom portion 21 of the cabinet-like structure 1. The top plate 18 connects the wall members 10, 11 at the top portion 19 and the bottom plate 20 connects the wall members 10, 13 at the bottom portion 21. Both the top plate 18 and the bottom plate 20 may be formed of a thin metal sheet and the cabinet-like structure 1 may be attached to the floor 6 of each milking stalls 3 in question via the thin bottom plate 20 by means of screws 22. It is to be noted that the separate bottom plate 20 may be excluded, wherein the bottom of the cabinet-like structure may be a part of the floor 6 of each milking stalls 3 in question. It is also to be noted that the wall arrangement 5 is not shown in Fig 3.

When an animal is present in the milking stall 3, the rear portion of the animal is adjacent the second end 8 and the front portion of the animal is adjacent the first end 7. Since the milking stalls 3 are narrow it may happen that the animal pushes herself against the cabinet-like structure 1.

As can be seen in Fig 4a and Fig 4b one of the wall members comprises a continuos thin sheet 10 which is shaped in such a way that it surrounds a great part of the inner space 9. Consequently, the wall member 10 is produced by essentially one single piece of a sheet. It is to be noted that wall member 11 is not shown in Fig 4a and Fig 4b as well as the first door portion 15 and the second door portion 16. The sheet 10, which preferably is a metal sheet, may be bent in order to form a rear wall portion 23 and two side wall portions 24. The rear wall portion 23 is short in relation to the side wall portions 24. Moreover, each side wall portion 24 extends from the rear wall portion 23 so that they form an angel, which is larger than 90° with the rear wall portion 23. Moreover, each side wall portion 24 is bent in the vertical direction at a distance from the outer end 25 of each side wall portion 24, wherein each side wall portion comprises an outer side wall portion 26. A plane, which extends along the surface of each of the outer side wall portions 26 is perpendicular to a plane which is parallel to the surface of the rear wall portion 23. The length of each outer side wall portion 26, in a cross-sectional view seen along the longitudinal axis x, is shorter than the length of each side wall portion which extends directly from the rear wall portion 23, seen in said cross section. Hereby, an animal being present in the milking stall may be permitted to push herself towards the outer side wall portion 26 of the cabinet like structure 1. Consequently, it is an advantage that this outer side wall portion 26 is short in order to withstand substantially radial forces from the animal.

In order to better withstand such substantially radial forces from an animal the cabinet-like structure 1 may comprise a support structural element 27, which is provided in a plane perpendicular to the substantially vertical direction and which is attached to the wall member 10. Preferably, the support structural element 27 may be provided at a level of the upper rear portion of the animal. The cabinet-like structure may comprise further support structural elements 28, 29.

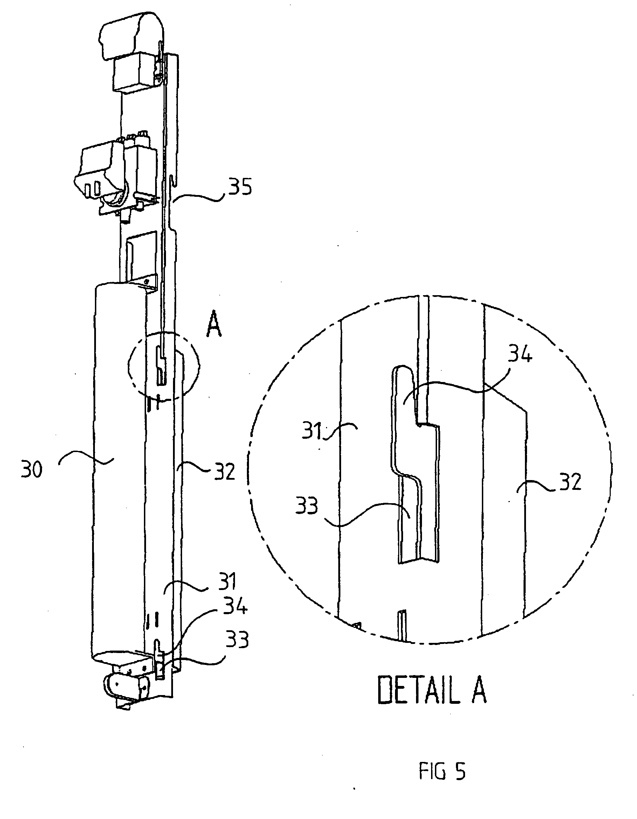

Fig 5 shows a driving arrangement 30 attached to a support member 31, which engages a suspension arrangement 32, which is intended to be attached to the inner space 9 of the cabinet-like structure 1. The suspension arrangement 32 may be arranged to the rear wall portion 23 of the inner space 9 of the cabinet-like structure 1. The driving arrangement 30 comprises a pneumatic power cylinder which through an elongated element 37, such as a cord, is connected to the milking member (not shown) and is provided to remove the milking member from the animal after the milking is finished. By the driving arrangement it is possible to achieve vacuum or compressed air. The driving arrangement 30 is attached to the support member 31, which may be in the form of a rail which comprises first means 33, which are arranged to co-operate with second means 34 of the suspension arrangement 32 in such a way that the support member 31 with the driving arrangement 30 may be detached from the suspension arrangement 32 which is intended to be provided on the rear wall portion 23 of the inner space 9 of the cabinet-like structure 1. Consequently, the first means are arranged for quick-joint attachment to the second means.

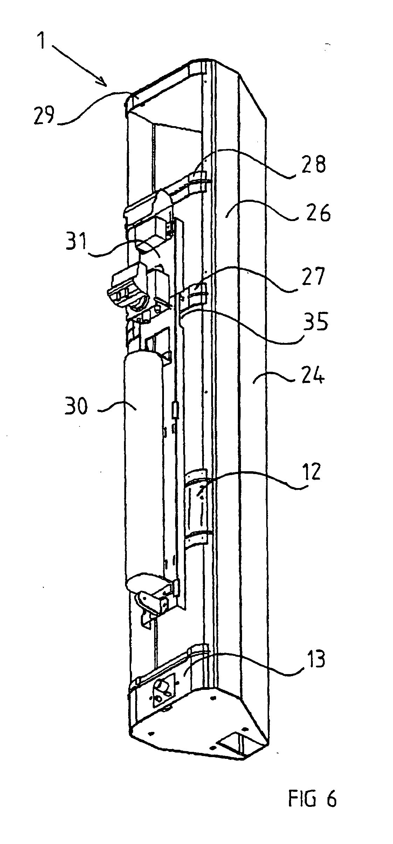

The first means 33 of the support member 31 may comprise openings and the second means 34 of the suspension arrangement 32 may comprise hooks. Moreover, as can be seen in Fig 5, the support member 31 may comprise recesses 35, which may be arranged to engage the support structural element 27, which is attached to the wall member 10, as can be seen in Fig 6. Hereby, when the first door portion 15 is in its second position, it is possible to detach the support member 31 with the driving arrangement 30 from the hooks 34 and to provide the support member 31 with the driving arrangement 30 outside the cabinet-like structure 1 by means of the recesses 35 engaging the support structural element 27. Hereby, service work is facilitated. It is to be noted that the cabinet-like structure 1 may comprise hooks or the like (not shown) provided outside said cabinet-like structure 1 in such a manner that the first means in the form of openings may engage the hooks provided outside the cabinet-like structure 1, wherein a person in a working position standing on the floor 17 may reach the driving arrangement 30 when the first means are engaging the hooks provided outside the cabinet-like structure 1. Moreover, it is to be noted that said first means may comprise recesses similar to the recesses 35 and the second means may comprise a rail or the like which is provided inside said cabinet-like structure 1 in such a way that the said recesses may detachably engage said rail. If the first means comprises recesses, the first means may detachably engage the support structural element 27. It is to be noted that third means in the following claims may comprise said support structural element 27. Further, it is to be noted that wall member 11 is not shown in Fig 6 as well as the first door portion 15 and the second door portion 16.

It is to be noted that other components of the milking equipment may be attached to the support member 31 in Fig 5. For example the component may be a computer arranged to control and supervise the milking procedure, for example the vacuum level of the milking equipment, a pulsator which is arranged to provide a pulsating vacuum for a pulsating chamber of each of the teatcups of the milking member, a milking meter etc. It is also to be noted that the support member 31 in some cases may be excluded, wherein the component may be associated with the first means in some other way. Moreover, the component associated with said first means 33 may comprise at least one quick-joint connector for operably connecting the component in question to at least one further component of the milking stall 3.

If the component is the driving arrangement 30 such as is shown in Fig 5, the driving arrangement may comprise at least one quick joint connector (not shown) for the elongated member (not shown) which is connected to the milking member (not shown). By the quick-joint connector it is possible to quickly detach the elongated member. This is an advantage when the driving arrangement 30 is to be replaced. By quickly detach the elongated member from the driving arrangement 30, the driving arrangement 30 together with the support member 31 may be replaced by a new driving arrangement attached to an other, similar support member. The new driving arrangement may also comprise at least one quick-joint connector for operably connect the new driving arrangement with the elongated member. It is to be noted that the driving arrangement 30 may comprise several quick-joint connectors, preferably one quick-joint connector for each component to which the driving arrangement 30 is connected.

The present invention is not restricted to the embodiments shown above but may be varied and modified within the scope of the following claims.

## Claims

1. A rotary parlour (2) comprising a plurality of milking stalls (3) each of which is provided with a milking position (4) for an animal and with at least one milking equipment comprising a milking member arranged to be attached to the animal being present in the milking stall in question for milking thereof, wherein each of said milking stalls (3) is defined by at least one wall arrangement (5) and a floor (6) and extends between a first end (7) and a second end (8) in such a way that when an animal is present in one of said milking stalls (3) in said milking position (4), the front portion of said animal is adjacent said first end (7) and the back portion of said animal is adjacent said second end (8), wherein each milking stall (3) comprises a cabinet-like structure (1) provided at said second end (8), which forms a building element of said parlour (2) and which has a longitudinal axis (x) extending in a substantially vertical direction and which defines an inner space (9), wherein said wall arrangement (5) adjoins two milking stalls (3) and said cabinet-like structure (1) carries said wall arrangement (5) and is mounted to the floor (6) of said milling stalls (3), wherein said cabinet-like structure (1) comprises wall members (10, 11, 12, 13) of a material with thin wall thickness and wherein said wall members (10, 11, 12, 13) extend in said substantially vertical direction and are attached to each other and form a hollow tube-like structure which surrounds said inner space (9), wherein different components of said milking equipment are housed inside said cabinet-like structure (1), and wherein said wall members protect said different components which are housed inside said cabinet-like structure (1).

2. A rotary parlour (2) according to claim 1, **characterised in that** the cabinet-like structure (1) comprises a top portion (19) and a bottom portion (21) and that said bottom portion (21) is attached to said floor.

3. A rotary parlour (2) according to claim 2, **characterised in that** the cabinet-like structure (1) comprises a substantially horizontal top plate (18) which connects the wall members (10, 11) at the top portion (19), and a substantially horizontal bottom plate (20) which connects the wall members (10, 13) at the bottom portion (21), wherein the cabinet-like structure (1) forms an elongated hollow box-like structure which extends in said substantially vertical direction and which encloses said inner space (9).

4. A rotary parlour (2) according to claim 3, **characterised in that** the bottom plate (20) is a part of said floor (6).

5. A rotary parlour (2) according to claim 3, **characterised in that** the bottom plate (20) is formed of a thin metal sheet and that the cabinet-like structure (1) is attached to said floor (6) via said thin metal sheet.

6. A rotary parlour (2) according to any one of claims 1 to 5, **characterised in that** respective wall member (10, 11, 12, 13) is formed of a thin metal sheet.

7. A rotary parlour (2) according to claim 3, **characterised in that** the top plate (18) is formed of a thin metal sheet.

8. A rotary parlour (2) according to any one of claims 5,6 and 7, **characterised in that** the thickness of the metal sheets are about 2-4 mm.

9. A rotary parlour (2) according to any one of the preceding claims, **characterised in that** said cabinet-like structure (1) comprises means (27,28,29) arranged to strengthen the cabinet-like structure (1) in order to withstand radial forces.

10. A rotary partour (2) according to any one of claims 1 to 9, **characterised in that** said means (27,28,29) comprises a support structural element which is attached to at least one of said wall members (10,11,12,13).

11. A rotary parlour (2) according to claim 10, **characterised in that** said support structural element (27,28,29) is provided in a plane perpendicular to said substantially vertical direction.

12. A rotary parlour (2) according to any one of the preceding claims, **characterised in that** the cabinet-like structure (1) is arranged to house a driving arrangement (30) provided to remove the milking member from the animal after the milking is finished and that said driving arrangement (30) is attached to a support member (31) which comprises first means (33) arranged to permit detachment of said support member in said inner space (9).

13. A rotary parlour (2) according to any one of the preceding claims, **characterised in that** the cabinet-like structure (1) comprises an operating panel (14) by which the milking equipment is controllable and that the cabinet-like structure (1) comprises a first door portion (15), which is detachably connected to the cabinet-like structure (1), wherein the operating panel (14) is arranged on said first door portion (15).

14. A rotary parlour (2) according to claim 13, **characterised in that** the first door portion (15), when connected to the cabinet-like structure (1), is movable between a first position, in which the cabinet-like structure (1) forms a closed structure at least in said substantially vertical direction, and a second position, in which the inner space (9) of the cabinet-like structure (1) is possible to reach for a person in a working position from the outside of the cabinet-iike structure (1).

15. A rotary parlour (2) according to any one of the preceding claims, **characterised in that** the cabinet-like structure (1) comprises a second door portion (16) which is movable between a first position, in which the cabinet-like structure (1) forms a closed structure at least in said substantially vertical direction, and a second position, wherein the second door portion (16) carries a deaning device for cleaning the milking member which is possible to use in said second position.

16. A rotary parlour (2) according to any one of the claims 1 to 15, **characterised in that** one of said wall members (10,11,12,13) comprises a continuous thin sheet which is shaped in such a way that it surrounds a great part of said inner space (9).

17. A rotary parlour (2) according to claim 16, **characterised in that** said continuous thin sheet forms at least, in a cross-sectional view seen along said longitudinal axis (x), a rear wall portion (23) and two side wall portions (24,26).

18. A rotary parlour (2) according to claim 10 and 17, **characterised in that** said support structural element (27,28,29) is attached to said side wall portions (24,26).

19. A rotary parlour (2) according to any one of the preceding claims, **characterised in that** said wall arrangement (5) forms a side wall of said milking stall (3) and extends between said first end (7) and said second end (8).

20. A rotary parlour (2) according to any one of the preceding claims, **characterised by** an arrangement which comprises first means (33) for quick-joint attachment to at least second means (34) arranged inside said inner space (9) of said cabinet-like structure in such a manner that the first means (33) detachably engage said second means (34), wherein at least one component (30) is associated with said first means (33).

21. A rotary parlour (2) according to claim 20, **characterised in that** said component (30) is provided completely inside said inner space (9) when said first means (33) engage said second means (34).

22. A rotary parlour (2) according to any one of the claims 20 and 21, **characterised in that** said arrangement comprises at least third means (27) for quick-joint attachment to at least said first means (33) in such a manner that the first means (33) detachable engages the third means (27), wherein the third means (27) is provided on the cabinet-like structure (1) so that said component (30) is easy to reach for a person in a working position from the outside of the cabinet-like structure (1) when said first means (33) engage said third means (27).

23. A rotary parlour (2) according to any one of the claims 20-22, **characterised in that** said component (30) associated with said first means (33) comprises at least one quick-joint connector for operably connecting said component (30) to at least one further component of the milking stall (3).

24. A rotary parlour (2) arrangement according to any one of the claims 20-22, **characterised in that** said component (30) is selected from a group of components including, a driving arrangement, a pulsator, a milk meter and a computer

## Patentansprüche

1. Karussellanlage (2), die eine Vielzahl von Melkständen (3) umfasst, von denen jeder mit einem Melkplatz (4) für ein Tier und mit mindestens einer Melkausrüstung versehen ist, die ein Melkelement umfasst, das so angeordnet ist, dass es an dem Tier angebracht wird, das in dem fraglichen Melkstand steht, um es zu melken, wobei jeder der Melkstände (3) durch mindestens eine Wandanordnung (5) und einen Boden (6) definiert ist und zwischen einem ersten Ende (7) und einem zweiten Ende (8) derart verläuft, dass, wenn ein Tier in einem der Melkstände (3) an dem Melkplatz (4) steht, der vordere Bereich des Tiers an das erste Ende (7) angrenzt und der hintere Abschnitt des Tiers an das zweite Ende (8) angrenzt, wobei jeder Melkstand (3) eine an dem zweiten Ende (8) vorgesehene schrankartige Struktur (1) umfasst, die ein Bauelement der Anlage (2) bildet und die eine Längsachse (x) aufweist, die in einer im Wesentlichen senkrechten Richtung verläuft, und die einen Innenraum (9) definiert, wobei die Wandanordnung (5) an zwei Melkstände (3) angrenzt und die schrankartige Struktur (1) die Wandanordnung (5) trägt und an dem Boden (6) der Melkstände (3) montiert ist, wobei die schrankartige Struktur (1) Wandelemente (10, 11, 12, 13) aus einem Material mit geringer Wandstärke umfasst und wobei die Wandelemente (10, 11, 12, 13) in der im Wesentlichen senkrechten Richtung verlaufen und aneinander befestigt sind und eine hohle röhrenartige Struktur bilden, die den Innenraum (9) umgibt, wobei verschiedene Bestandteile der Melkausrüstung in der schrankartigen Struktur (1) untergebracht sind, und wobei die Wandelemente die verschiedenen Bestandteile, die in der schrankartigen Struktur (1) untergebracht sind, schützen.

2. Karussellanlage (2) nach Anspruch 1, **dadurch gekennzeichnet, dass** die schrankartige Struktur (1) einen oberen Abschnitt (19) und einen unteren Abschnitt (21) umfasst und dass der untere Abschnitt (21) an dem Boden angebracht ist.

3. Karussellanlage (2) nach Anspruch 2, **dadurch gekennzeichnet, dass** die schrankartige Struktur (1) eine im Wesentlichen waagerechte obere Platte (18) umfasst, die die Wandelemente (10, 11) an dem oberen Abschnitt (19) verbindet, und eine im Wesentlichen waagerechte untere Platte (20), die die Wandelemente (10, 13) an dem unteren Abschnitt (21) verbindet, wobei die schrankartige Struktur (1) eine längliche hohle kastenartige Struktur bildet, die in der im Wesentlichen senkrechten Richtung verläuft und die den Innenraum (9) einfasst.

4. Karussellanlage (2) nach Anspruch 3, **dadurch gekennzeichnet, dass** die untere Platte (20) ein Teil des Bodens (6) ist.

5. Karussellanlage (2) nach Anspruch 3, **dadurch gekennzeichnet, dass** die untere Platte (20) aus einem dünnen Blech geformt ist und dass die schrankar-tige Struktur (1) an dem Boden (6) über das dünne Blech angebracht ist.

6. Karussellanlage (2) nach einem der Ansprüche 1 bis 5, **dadurch gekennzeichnet, dass** das jeweilige Wandelement (10, 11, 12, 13) aus einem dünnen Blech geformt ist.

7. Karussellanlage (2) nach Anspruch 3, **dadurch gekennzeichnet, dass** die obere Platte (18) aus einem dünnen Blech geformt ist.

8. Karussellanlage (2) nach einem der Ansprüche 5, 6 und 7, **dadurch gekennzeichnet, dass** die Stärke der Bleche etwa 2 bis 4 mm beträgt.

9. Karussellanlage (2) nach einem der vorhergehenden Ansprüche, **dadurch gekennzeichnet, dass** die schrankartige Struktur (1) Mittel (27, 28, 29) umfasst, die so angeordnet sind, dass sie die schrankartige Struktur (1) verstärken, um radiale Kräfte aufzunehmen.

10. Karussellanlage (2) nach einem der Ansprüche 1 bis 9, **dadurch gekennzeichnet, dass** das Mittel (27, 28, 29) ein Stützkonstruktionselement umfasst, das an mindestens einem der Wandelemente (10, 11, 12, 13) angebracht ist.

11. Karussellanlage (2) nach Anspruch 10, **dadurch gekennzeichnet, dass** das Stützkonstruktionselement (27, 28, 29) in einer Ebene senkrecht zu der im Wesentlichen senkrechten Richtung vorgesehen ist.

12. Karussellanlage (2) nach einem der vorhergehenden Ansprüche, **dadurch gekennzeichnet, dass** die schrankartige Struktur (1) so angeordnet ist, dass sie eine Antriebsanordnung (30) aufnimmt, die dafür vorgesehen ist, dass sie das Melkelement von dem Tier abnimmt, nachdem das Melken beendet ist, und dass die Antriebsanordnung (30) an einem Halterelement (31) angebracht ist, das erste Mittel (33) umfasst, die so angeordnet sind, dass sie das Abnehmen des Halterelements in dem Innenraum (9) ermöglichen.

13. Karussellanlage (2) nach einem der vorhergehenden Ansprüche, **dadurch gekennzeichnet, dass** die schrankartige Struktur (1) ein Bedienfeld (14) umfasst, über das die Melkausrüstung steuerbar ist, und dass die schrankartige Struktur (1) einen ersten Türabschnitt (15) umfasst, der abnehmbar mit der schrankartigen Struktur (1) verbunden ist, wobei das Bedienfeld (14) an dem ersten Türabschnitt (15) angeordnet ist.

14. Karussellanlage (2) nach Anspruch 13, **dadurch gekennzeichnet, dass** der erste Türabschnitt (15), wenn er mit der schrankartigen Struktur (1) verbunden ist, zwischen einer ersten Stellung, in der die schrankartige Struktur (1) eine geschlossene Struktur zumindest in der im Wesentlichen senkrechten Richtung bildet, und einer zweiten Stellung beweglich ist, in der der Innenraum (9) der schrankartigen Struktur (1) für eine Person in einer Arbeitsstellung von außerhalb der schrankartigen Struktur (1) aus zugänglich ist.

15. Karussellanlage (2) nach einem der vorhergehenden Ansprüche, **dadurch gekennzeichnet, dass** die schrankartige Struktur (1) einen zweiten Türabschnitt (16) umfasst, der zwischen einer ersten Stellung, in der die schrankartige Struktur (1) eine geschlossene Struktur zumindest in der im Wesentlichen senkrechten Richtung bildet, und einer zweiten Stellung beweglich ist, wobei der zweite Türabschnitt (16) eine Reinigungsvorrichtung zum Reinigen des Melkelements trägt, die in der zweiten Stellung einsetzbar ist.

16. Karussellanlage (2) nach einem der Ansprüche 1 bis 15, **dadurch gekennzeichnet, dass** eins der Wandelemente (10, 11, 12, 13) eine zusammenhängende dünne Platte umfasst, die so geformt ist, dass sie einen großen Teil des Innenraums (9) umgibt.

17. Karussellanlage (2) nach Anspruch 16, **dadurch gekennzeichnet, dass** die zusammenhängende dünne Platte, in einer Querschnittansicht entlang der Längsachse (x), zumindest einen hinteren Wandabschnitt (23) und zwei Seitenwandabschnitte (24, 26) bildet.

18. Karussellanlage (2) nach Anspruch 10 und 17, **dadurch gekennzeichnet, dass** das Stützkonstruktionselement (27, 28, 29) an den Seitenwandabschnitten (24, 26) angebracht ist.

19. Karussellanlage (2) nach einem der vorhergehenden Ansprüche, **dadurch gekennzeichnet, dass** die Wandanordnung (5) eine Seitenwand des Melkstands (3) bildet und zwischen dem ersten Ende (7) und dem zweiten Ende (8) verläuft.

20. Karussellanlage (2) nach einem der vorhergehenden Ansprüche, **gekennzeichnet durch** eine Anordnung, die erste Mittel (33) zur Schnellverbindung mit zumindest zweiten Mitteln (34) umfasst, die derart in dem Innenraum (9) der schrankartigen Struktur angeordnet sind, dass die ersten Mittel (33) lösbar mit den zweiten Mitteln (34) in Eingriff gelangen, wobei zumindest ein Bestandteil (30) den ersten Mitteln (33) zugehörig ist.

21. Karussellanlage (2) nach Anspruch 20, **dadurch gekennzeichnet, dass** der Bestandteil (30) vollständig in dem Innenraum (9) angeordnet ist, wenn die ersten Mittel (33) mit den zweiten Mitteln (34) in Eingriff stehen.

22. Karussellanlage (2) nach einem der Ansprüche 20 und 21, **dadurch gekennzeichnet, dass** die Anordnung zumindest ein drittes Mittel (27) zur derartigen Schnellverbindung mit zumindest dem ersten Mittel (33) umfasst, dass das erste Mittel (33) lösbar mit dem dritten Mittel (27) in Eingriff gelangt, wobei das dritte Mittel (27) an der schrankartigen Struktur (1) vorgesehen ist, sodass der Bestandteil (30) für eine Person in einer Arbeitsstellung von außerhalb der schrankartigen Struktur (1) aus leicht zu erreichen ist, wenn die ersten Mittel (33) mit dem dritten Mittel (27) in Eingriff stehen.

23. Karussellanlage (2) nach einem der Ansprüche 20 bis 22, **dadurch gekennzeichnet, dass** der den ersten Mitteln (33) zugehörige Bestandteil (30) mindestens einen Schnellverbinder zum funktionsfähigen Verbinden des Bestandteils (30) mit mindestens einem weiteren Bestandteil des Melkstands (3) umfasst.

24. Anordnung einer Karussellanlage (2) nach einem der Ansprüche 20 bis 22, **dadurch gekennzeichnet, dass** der Bestandteil (30) aus einer Gruppe von Bestandteilen ausgewählt ist, die eine Antriebsanordnung, einen Pulsator, eine Milchmengenmessvorrichtung und einen Computer umfasst.

## Revendications

1. Salle de traite rotative (2) comprenant une pluralité de stalles de traite (3) dont chacune dispose d'un emplacement de traite (4) pour un animal et d'au moins un équipement de traite comprenant un élément de traite agencé pour être fixé à l'animal qui est présent dans la stalle de traite en question pour le traire, chacune desdites stalles de traite (3) étant délimitée par au moins un agencement de cloison (5) et un plancher (6) et s'étendant entre une première extrémité (7) et une seconde extrémité (8) de telle façon que quand un animal est présent dans l'une desdites stalles de traite (3) dans ledit emplacement de traite (4), la partie avant dudit animal est adjacente à ladite première extrémité (7) et la partie arrière dudit animal est adjacente à ladite seconde extrémité (8), chaque stalle de traite (3) comprenant une structure de type armoire (1) située à ladite seconde extrémité (8), qui forme un élément de construction de ladite salle de traite (2) et qui présente un axe longitudinal (x) s'étendant dans une direction essentiellement verticale et qui délimite un espace intérieur (9), ledit agencement de cloison (5) étant contigu à deux stalles de traite (3) et ladite structure de type armoire (1) portant ledit agencement de cloison (5) et étant montée sur le plancher (6) desdites stalles de traite (3), ladite structure de type armoire (1) comprenant des éléments de paroi (10, 11, 12, 13) en un matériau présentant une faible épaisseur de paroi et lesdits éléments de paroi (10, 11, 12, 13) s'étendant dans ladite direction essentiellement verticale et étant fixés les uns aux autres et formant une structure de type tube creux qui entoure ledit espace intérieur (9), différents composants dudit équipement de traite étant logés à l'intérieur de ladite structure de type armoire (1), et lesdits éléments de paroi protégeant lesdits différents composants qui sont logés à l'intérieur de ladite structure de type armoire (1).

2. Salle de traite rotative (2) selon la revendication 1, **caractérisée en ce que** la structure de type armoire (1) comprend une partie supérieure (19) et une partie inférieure (21) et **en ce que** ladite partie inférieure (21) est fixée audit plancher.

3. Salle de traite rotative (2) selon la revendication 2, **caractérisée en ce que** la structure de type armoire (1) comprend une plaque supérieure essentielle-ment horizontale (18) qui relie les éléments de paroi (10, 11) à la partie supérieure (19), et une plaque inférieure essentiellement horizontale (20) qui relie les éléments de paroi (10, 13) à la partie inférieure (21), la structure de type armoire (1) formant une structure de type boîte creuse allongée qui s'étend dans ladite direction essentiellement verticale et qui enferme ledit espace intérieur (9).

4. Salle de traite rotative (2) selon la revendication 3, **caractérisée en ce que** la plaque inférieure (20) fait partie dudit plancher (6).

5. Salle de traite rotative (2) selon la revendication 3, **caractérisée en ce que** la plaque inférieure (20) est réalisée en une tôle mince et **en ce que** la structure de type armoire (1) est fixée audit plancher (6) par ladite tôle mince.

6. Salle de traite rotative (2) selon l'une quelconque des revendications 1 à 5, **caractérisée en ce que** l'élément de paroi respectif (10, 11, 12, 13) est réalisé en une tôle mince.

7. Salle de traite rotative (2) selon la revendication 3, **caractérisée en ce que** la plaque supérieure (18) est réalisée en une tôle mince.

8. Salle de traite rotative (2) selon l'une quelconque des revendications 5, 6 et 7, **caractérisée en ce que** l'épaisseur des tôles est d'environ 2 à 4 mm.

9. Salle de traite rotative (2) selon l'une quelconque des revendications précédentes, **caractérisée en ce que** ladite structure de type armoire (1) comprend des moyens (27, 28, 29) agencés pour renforcer la structure de type armoire (1) afin de résister à des forces radiales.

10. Salle de traite rotative (2) selon l'une quelconque des revendications 1 à 9, **caractérisée en ce que** ledit moyen (27, 28, 29) comprend un élément structural de support qui est fixé à au moins l'un desdits éléments de paroi (10, 11, 12, 13).

11. Salle de traite rotative (2) selon la revendication 10, **caractérisée en ce que** ledit élément structural de support (27, 28, 29) est situé dans un plan perpendiculaire à ladite direction essentiellement verticale.

12. Salle de traite rotative (2) selon l'une quelconque des revendications précédentes, **caractérisée en ce que** la structure de type armoire (1) est agencée pour loger un ensemble d'entraînement (30) destiné à retirer l'élément de traite de l'animal après que la traite est terminée et **en ce que** ledit ensemble d'entraînement (30) est fixé à un élément de support (31) qui comprend des premiers moyens (33) agencés pour permettre le détachement dudit élément de support dans ledit espace intérieur (9).

13. Salle de traite rotative (2) selon l'une quelconque des revendications précédentes, **caractérisée en ce que** la structure de type armoire (1) comprend un panneau de commande (14) avec lequel l'équipement de traite peut être commandé et **en ce que** la structure de type armoire (1) comprend une première partie de porte (15), qui est reliée de manière détachable à la structure de type armoire (1), le panneau de commande (14) étant agencé sur ladite première partie de porte (15).

14. Salle de traite rotative (2) selon la revendication 13, **caractérisée en ce que** la première partie de porte (15), quand elle est reliée à la structure de type armoire (1), est mobile entre une première position, dans laquelle la structure de type armoire (1) forme une structure fermée au moins dans ladite direction essentiellement verticale, et une seconde position, dans laquelle l'espace intérieur (9) de la structure de type armoire (1) est accessible de l'extérieur de la structure de type armoire (1) pour une personne dans une position de travail.

15. Salle de traite rotative (2) selon l'une quelconque des revendications précédentes, **caractérisée en ce que** la structure de type armoire (1) comprend une seconde partie de porte (16) qui est mobile entre une première position, dans laquelle la structure de type armoire (1) forme une structure fermée au moins dans ladite direction essentiellement verticale, et une seconde position, la seconde partie de porte (16) portant un dispositif de nettoyage pour nettoyer l'élément de traite qui peut être utilisé dans la seconde position.

16. Salle de traite rotative (2) selon l'une quelconque des revendications 1 à 15, **caractérisée en ce que** l'un desdits éléments de paroi (10, 11, 12, 13) comprend une feuille mince continue qui est formée de telle façon qu'elle entoure une grande partie dudit espace intérieur (9).

17. Salle de traite rotative (2) selon la revendication 16, **caractérisée en ce que** ladite feuille mince continue forme au moins, dans une vue en coupe le long dudit axe longitudinal (x), une partie de paroi arrière (23) et deux parties de paroi latérales (24, 26).

18. Salle de traite rotative (2) selon les revendications 10 et 17, **caractérisée en ce que** ledit élément structural de support (27, 28, 29) est fixé auxdites parties de paroi latérales (24, 26).

19. Salle de traite rotative (2) selon l'une quelconque des revendications précédentes, **caractérisée en ce que** ledit agencement de cloison (5) forme une cloison latérale de ladite stalle de traite (3) et s'étend entre ladite première extrémité (7) et ladite seconde extrémité (8).

20. Salle de traite rotative (2) selon l'une quelconque des revendications précédentes, **caractérisée par** un dispositif qui comprend des premiers moyens (33) pour un raccord rapide avec au moins des seconds moyens (34) agencés à l'intérieur dudit espace intérieur (9) de ladite structure de type armoire de telle façon que les premiers moyens (33) viennent en prise de manière détachable avec lesdits seconds moyens (34), au moins un composant (30) étant associé auxdits premiers moyens (33).

21. Salle de traite rotative (2) selon la revendication 20, **caractérisée en ce que** ledit composant (30) est situé complètement à l'intérieur dudit espace intérieur (9) quand lesdits premiers moyens (33) sont en prise avec lesdits seconds moyens (34).

22. Salle de traite rotative (2) selon l'une quelconque des revendications 20 et 21, **caractérisée en ce que** ledit dispositif comprend au moins des troisièmes moyens (27) pour un raccord rapide avec au moins lesdits premiers moyens (33) de telle façon que le premier moyen (33) vient en prise de manière détachable avec le troisième moyen (27), le troisième moyen (27) étant situé sur la structure de type armoire (1) de sorte que ledit composant (30) est facile à atteindre de l'extérieur de la structure de type armoire (1) pour une personne dans une position de travail quand lesdits premiers moyens (33) sont en prise avec lesdits troisièmes moyens (27).

23. Salle de traite rotative (2) selon l'une quelconque des revendications 20 à 22, **caractérisée en ce que** ledit composant (30) associé auxdits premiers moyens (33) comprend au moins un raccord rapide pour relier de manière fonctionnelle ledit composant (30) à au moins un autre composant de la stalle de traite (3).

24. Dispositif de salle de traite rotative (2) selon l'une quelconque des revendications 20 à 22, **caractérisé en ce que** ledit composant (30) est sélectionné dans un groupe de composants comprenant un ensemble d'entraînement, un pulsateur, un compteur à lait et un ordinateur.
